# EUROPÄISCHE PATENTSCHRIFT

(11) **EP 1 174 322 B1**
(45) Veröffentlichungstag und Bekanntmachung des Hinweises auf die Patenterteilung: **02.09.2009**
(21) Anmeldenummer: 01115619.7
(22) Anmeldetag: 03.07.2001
(51) Int. Cl.: B60T 13/74, F16D 65/21

(54) **Elektromechanische Bremsanlage für ein mehrachsiges Fahrzeug, insbesondere Personenkraftwagen**
Electro-mechanical brake system for multi-axle vehicle in particular passenger car
Système de freinage électromécanique pour un véhicule à axes multiples en particulier véhicule de passagers

(30) Priorität: 21.07.2000 DE 10035506
(43) Veröffentlichungstag der Anmeldung: 23.01.2002
(73) Patentinhaber: Bayerische Motoren Werke Aktiengesellschaft, 80809 München (DE); Continental Teves AG & Co. oHG, 60488 Frankfurt am Main (DE)
(72) Erfinder: Kufner, Thomas, 85221 Dachau (DE); Vielwerth, Gerhard, 91795 Obereichstätt (DE); Maron, Christof, Dr., 65779 Kelkheim (DE)

(56) Entgegenhaltungen:
- DE-A- 19 500 834
- DE-A- 19 537 464

## Beschreibung

Die Erfindung betrifft eine elektromechanische Bremsanlage für ein mehrachsiges, insbesondere zweiachsiges Fahrzeug, insbesondere einen Personenkraftwagen, wobei an jedem Fahrzeug-Rad ein elektromechanischer Aktuator vorgesehen ist, der bei gewünschter Bremsbetätigung einen Bremsbelag gegen ein rotierendes Element der Reibungsbremse anpreßt und wobei bei einer gewünschten Bremsbetätigung nicht sämtliche Aktuatoren gleichzeitig aktiviert und insbesondere die der Hinterachse des Fahrzeuges zugeordneten Aktuatoren verzögert gegenüber den der Fzg.-Vorderachse zugeordneten Aktuatoren betätigt werden. Eine derartige elektromechanische Bremsanlage ist aus der DE 195 37 464 A1 bekannt.

Elektromechanische Bremsen-Aktuatoren sind üblicherweise aus einem Elektromotor und einem sich daran anschließenden Rotations- oder Translationsgetriebe zusammengesetzt, worüber bei Bedarf die Bremse zugespannt wird, d.h. Bremsbeläge gegen eine Bremsscheibe oder dgl. gepreßt werden, oder die zugespannte Bremse gelöst wird. Als elektrische Energiequelle für die Bremsen-Aktuatoren steht dabei das Fzg.-Bordnetz zur Verfügung, welches üblicherweise mit einer elektrischen Spannung von 12 Volt oder 36 Volt betrieben wird.

Wegen der relativ hohen Massenträgheit des rotierenden aus dem Elektromotor mit den Getriebestufen bestehenden Aktuatorsystems wird im Hinblick auf einen möglichst schnellen Bremskraft-Aufbau üblicherweise jeder Aktuator bei Einleitung eines gewünschten Bremsvorganges sofort mit der maximal möglichen Stromstärke beaufschlagt. Nur wenn den Bremsen-Aktuatoren deren maximale (elektrische) Leistung abverlangt bzw. die maximal mögliche elektrische Energie bereitgestellt wird, ist üblicherweise eine ausreichend schnelle Zuspannung der einzelnen Bremsen an den Fzg.-Rädern möglich. Dabei ist diese maximale Leistungsaufnahme in der Aktuatorik im wesentlichen nur zur Überwindung der Massenträgheit erforderlich, d.h. wenn der Aktuator aus dem Stand heraus beschleunigt werden muß, während für das reine Anpressen der Bremsbeläge an das sog. rotierende Element der Reibungsbremse (bspw. an eine Bremsscheibe) eine deutlich geringere Leistung benötigt wird.

Wenn nun bei einer Bremsanforderung sämtliche Bremsen-Aktuatoren eines Fahrzeuges gleichzeitig mit voller Stromstärke bestromt werden, so resultieren hieraus Leistungsspitzen im elektrischen Bordnetz, die bei Personenkraftwagen in der Größenordnung von 7 kW liegen können. Derartig hohe Leistungsspitzen erfordern aufwendige Massnahmen, wie bspw. Batterien mit hoher Kapazität und/oder Hochleistungsgeneratoren u.ä., was an sich unwirtschaftlich ist, nachdem die Zeitspanne, während derer ein Aktuator die besagte volle Stromstärke (bzw. Energie) benötigt, nur wenige Millisekunden beträgt, nämlich im wesentlichen solange dauert, bis der zunächst stillstehende Elektromotor angelaufen ist.

Als Abhilfemaßnahme für diese Problematik ist es aus der eingangs genannten DE 195 37 464 A1 bekannt, dass bei einer gewünschten Bremsbetätigung nicht sämtliche Aktuatoren gleichzeitig oder gleich stark aktiviert und insbesondere die der Hinterachse des Fahrzeuges zugeordneten Aktuatoren praktisch zeitlich verzögert gegenüber den der Fzg.-Vorderachse zugeordneten Aktuatoren betätigt werden. Wenn der Fahrer des Fahrzeugs ein Bremspedal oder dgl. betätigt, werden somit zunächst nur die Vorderachs-Bremsaktuatoren mit maximaler Leistung betrieben, während die Hinterachs-Aktuatoren bei diesem bekannten Stand der Technik zunächst nur mit einem deutlich geringeren Stromwert beaufschlagt werden, der im wesentlichen nur ein Anlegen der Bremsbeläge und somit eine Überwindung des Bremsenlüftspiels gewährleistet.

Grundsätzlich ist dieser bekannte Vorschlag im Hinblick auf die oben geschilderte Problematik vorteilhaft, jedoch sind noch Verbesserungen insbesondere im Hinblick auf eine möglichst schnelle und somit höchstwirksame Bremsbetätigung möglich, die aufzuzeigen sich die vorliegende Erfindung zur Aufgabe gestellt hat.

Zur Lösung dieser Aufgabe wird vorgeschlagen, dass für die Versorgung eines zeitlich zuerst zu betätigenden Aktuators mit elektrischer Spitzenleistung neben der diesem zugeordneten elektronischen Leistungsendstufe auf die einem zeitlich verzögert zu aktivierenden Aktuator zugeordnete elektronische Leistungsendstufe zugegriffen wird.

Neben einer in der DE 195 37 464 A1 genannten Möglichkeit, diverse Aktuatoren zunächst aus dem Stand heraus lediglich geringer zu beschleunigen als andere Aktuatoren, besteht weiterhin die Möglichkeit, diverse Aktuatoren überhaupt zeitlich verzögert in Gang zu setzen, dann jedoch mit maximaler Leistungsaufnahme. Dies bedeutet, daß bei einer gewünschten Bremsbetätigung nicht sämtliche Aktuatoren gleichzeitig aktiviert werden. Dabei ist der Zeitraum, um welchen einzelne Aktuatoren später in Gang gesetzt werden, als andere Aktuatoren, äußerst kurz, da an jedem Aktuator die maximale Stromstärke nur zum Ingangsetzen desselben benötigt wird, was lediglich wenige Millisekunden in Anspruch nimmt.

Dabei soll für die Versorgung eines zeitlich zuerst zu betätigenden Aktuators mit elektrischer Spitzenleistung neben der diesem zugeordneten elektronischen Leistungsendstufe auf die einem zeitlich verzögert zu aktivierenden Aktuator zugeordnete elektronische Leistungsendstufe zugegriffen werden, d.h. solange die elektronische(n) Leistungsendstufe(n) des/der letztgenannten bspw. Hinterachs-Aktuatoren nicht benötigt wird/werden, kann/können dieser/diese die Leistungsendstufe(n) der zeitlich zuerst betätigten bspw. Vorderachs-Aktuatoren in ihrer Funktion unterstützen. In anderen Worten ausgedrückt können an einem PKW durch geeignete Beschaltung wegen der verzögerten Ansteuerung der Hinterachs-Aktuatoren jeweils die beiden Leistungsendstufen eines Bremskreises während des Peakleistungsbedarfs der zeitlich zuerst betätigten Vorderachs-Aktuatoren zusammengeschaltet werden.

## Patentansprüche

1. Elektromechanische Bremsanlage für ein mehrachsiges, insbesondere zweiachsiges Fahrzeug, insbesondere einen Personenkraftwagen, wobei an jedem Fahrzeug-Rad ein elektromechanischer Aktuator vorgesehen ist, der bei gewünschter Bremsbetätigung einen Bremsbelag gegen ein rotierendes Element der Reibungsbremse anpreßt, und wobei bei einer gewünschten Bremsbetätigung nicht sämtliche Aktuatoren gleichermaßen aktiviert werden, und insbesondere die der Hinterachse des Fahrzeuges zugeordneten Aktuatoren verzögert gegenüber den der Fzg.-Vorderachse zugeordneten Aktuatoren betätigt werden,
**dadurch gekennzeichnet, daß** für die Versorgung eines zeitlich zuerst zu betätigenden Aktuators mit elektrischer Spitzenleistung neben der diesem zugeordneten elektronischen Leistungsendstufe auf die einem zeitlich verzögert zu aktivierenden Aktuator zugeordnete elektronische Leistungsendstufe zugegriffen wird.

## Claims

1. An electromechanical brake system for a multi-axle vehicle, more especially a two-axle vehicle, especially a passenger car, wherein an electromechanical actuator is provided on each vehicle wheel and, on desired brake actuation, presses a brake pad against a rotating element of the friction brake, and wherein, on a desired brake actuation, not all the actuators are activated to the same extent, and especially the actuators allocated to the rear axle of the vehicle are actuated in a delayed manner compared to the actuators allocated to the front axle of the vehicle, **characterised in that** to supply an actuator to be actuated first in terms of time with maximum electric power, apart from the electronic power output stage allocated thereto, the electronic power output stage allocated to an actuator to be actuated in a delayed manner is accessed.

## Revendications

1. Installation de freins électromécaniques pour un véhicule à plusieurs essieux, notamment deux essieux, en particulier un véhicule de tourisme, dans laquelle, chaque roue du véhicule est équipée d'un actionneur électromécanique qui, pour un actionnement souhaité du frein, presse une garniture de freins contre un élément en rotation du frein à friction, et
pour un actionnement souhaité du frein, tous les actionneurs ne sont pas actionnés de la même manière et notamment les actionneurs associés à l'essieu arrière du véhicule sont commandés de manière retardée par rapport aux actionneurs associés à l'essieu avant du véhicule,
**caractérisée en ce que**
pour alimenter un actionneur à commander d'abord avec une puissance électrique maximale, à côté de l'étage de puissance, électronique, associé à cet actionneur, on prend un étage de puissance, électronique, associé de façon temporisée à l'actionneur à activer.
